# EUROPÄISCHE PATENTSCHRIFT

(11) **EP 3 710 714 B1**
(45) Veröffentlichungstag und Bekanntmachung des Hinweises auf die Patenterteilung: **19.05.2021**
(21) Anmeldenummer: 18803890.5
(22) Anmeldetag: 07.11.2018
(51) Int. Cl.: F16C 17/06, F16C 27/02, F16C 41/02, G01B 21/16

(54) **AXIALLAGER FÜR EINE WELLE, INSBESONDERE FÜR DIE WELLE EINER HYDRAULISCHEN MASCHINE**
THRUST BEARING FOR A SHAFT, IN PARTICULAR FOR THE SHAFT OF A HYDRAULIC MACHINE
PALIER AXIAL POUR UN ARBRE, EN PARTICULIER POUR UN ARBRE DE MACHINE HYDRAULIQUE

(30) Priorität: 15.11.2017 DE 102017126829
(43) Veröffentlichungstag der Anmeldung: 23.09.2020
(73) Patentinhaber: Voith Patent GmbH, 89522 Heidenheim (DE)
(72) Erfinder: BOTTENSCHEIN, Michael, 89233 Neu-Ulm (DE); HASELBAUER, Jörg, 73479 Ellwangen (DE)
(86) Internationale Anmeldenummer: PCT/EP2018/080437
(87) Internationale Veröffentlichungsnummer: WO 2019/096646

(56) Entgegenhaltungen:
- EP-A1- 2 051 054
- JP-A- H10 246 225
- US-A- 2 225 835

## Beschreibung

Die Erfindung betrifft ein Axiallager zum Aufnehmen hoher Axiallasten.

Derartige Lager werden beispielsweise für Wasserturbinen, Pumpen oder Pumpturbinen mit vertikalen Wellen verwendet.

Das Lager umfasst im Wesentlichen eine Stützkonstruktion und eine Lastübertragungseinrichtung zum Übertragen der axial wirkenden Last von einer rotierenden Welle auf die Stützkonstruktion. Die Stützkonstruktion umfasst die Lagerplatte und eine Mehrzahl von Federelementen, welche sich auf der Lagerplatte abstützen. Dabei sind die Federelemente in der Regel gruppenweise angeordnet und jeweils von einem Lagerschuh überdeckt. Die Lastübertragungseinrichtung ist fest mit der Welle verbunden und umfasst einen Spurring, welcher auf den Lagerschuhen rotieren kann. Damit sich beim Betrieb an allen Lagerschuhen ein hydrodynamischer Schmierfilm zwischen dem Spurring und den Lagerschuhen einstellen kann, müssen die abstützenden Federelement das Kippen der Lagerschuhe ermöglichen und Fertigungs- wie auch Montagetoleranzen durch axiale Nachgiebigkeit kompensieren. Als Federelemente kommen Spiral- oder Tellerfedern oder auch Gummielemente in Frage. Hierzu sei auf die Dokumente US 4 168101, DE 26 26 609 C3, WO 2008/15502 A1, DE 935 037 und DE 332736 verwiesen. JP H10 246225 A zeigt ein Axiallager gemäß dem Oberbegriff des Anspruchs 1.

Die Auslegung des Lagers hängt wesentlich von der zu erwartenden Axiallast ab. Es gibt Anwendungen, bei denen die während dem Betrieb auftretenden Lasten nicht exakt bekannt sind, beziehungsweise während dem Betrieb stark schwanken können. Bei Wasserturbinen, Pumpen oder Pumpturbinen wechselt die Belastung infolge des im Betrieb hinzukommenden Wasserzuges ganz beträchtlich. Oftmals beträgt dieser Unterschied über 100%. Eine höhere Axiallast führt zu einer höheren Lagertemperatur, was bei zu hohen Lasten zu einer Schädigung des Lagers führen kann. Es ist daher in solchen Fällen wünschenswert, die tatsächlich vorliegende Axiallast zu messen. In der Vergangenheit wurde die Axiallast indirekt gemessen z.B. durch Messung einer Deformation an Elementen, die die Stützkonstruktion tragen. Solche Messungen sind nicht sehr genau und aufwändig.

Die Erfinder haben sich die Aufgabe gestellt, ein Axiallager anzugeben, bei dem die Axiallast wesentlich einfacher gemessen werden kann.

Die Erfinder haben erkannt, dass die gestellte Aufgabe durch ein Axiallager mit den Merkmalen des Anspruchs 1 gelöst werden kann. Vorteilhafte Ausführungsformen ergeben sich aus den von Anspruch 1 abhängigen Unteransprüchen.

Die erfindungsgemäße Lösung wird nachfolgend anhand von Figuren erläutert. Darin ist im Einzelnen folgendes dargestellt:
- Figur 1: Wasserkraftanlage mit einem Axiallager;
- Figur 2: Axiallager;
- Figur 3: Gruppe von Federelementen;
- Figur 4: Lagerschuh;
- Figur 5: Lagerplatte und Gruppe von Federelementen mit Lagerschuh;
- Figur 6: Messvorrichtung zur Messung des Abstandes zwischen Lagerplatte und Lagerschuh.

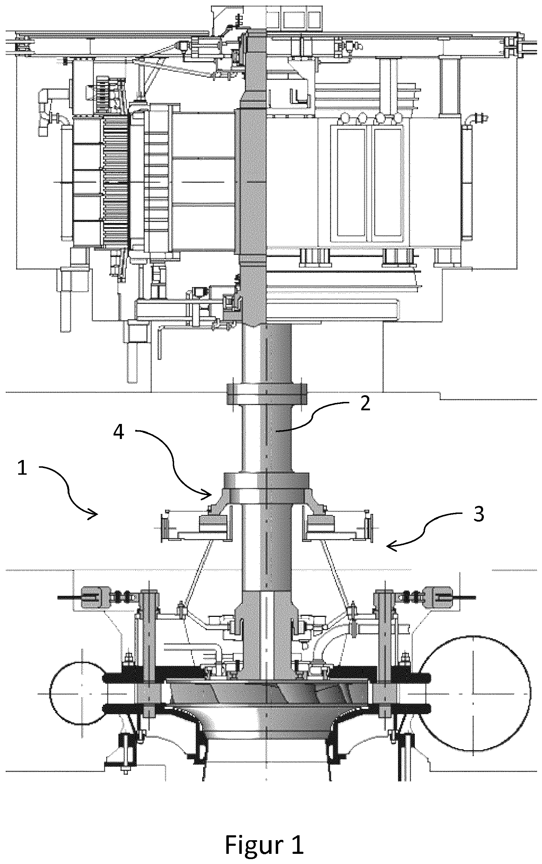

Figur 1 zeigt den Aufbau einer Wasserkraftanlage mit einem Axiallager. Dabei ist das Axiallager mit 1 bezeichnet. Das Axiallager 1 dient zur Aufnahme der auf der Welle lastenden axial wirkenden Last (Axiallast). Die Welle ist mit 2 bezeichnet. In der gezeigten Anordnung wird diese Axiallast einerseits durch die Gewichtskraft der an der Welle hängenden Komponenten und andererseits durch den Axialschub des Laufrades der hydraulischen Maschine während dem Betrieb verursacht. Dabei kann es sich um eine Turbine, eine Pumpe oder um eine Pumpturbine handeln. Während die Gewichtskräfte sehr genau bekannt sind, ist das nicht der Fall für die jeweils auftretenden Axialschübe, welche je nach Betriebszustand unterschiedlich sein können. Das Axiallager 1 wird von einer Stützkonstruktion getragen, welche mit 3 bezeichnet ist. Die Axiallast wird mittels einer Lastübertragungseinrichtung von der Welle 2 auf die Stützkonstruktion 3 übertragen. Die Lastübertragungseinrichtung ist mit 4 bezeichnet.

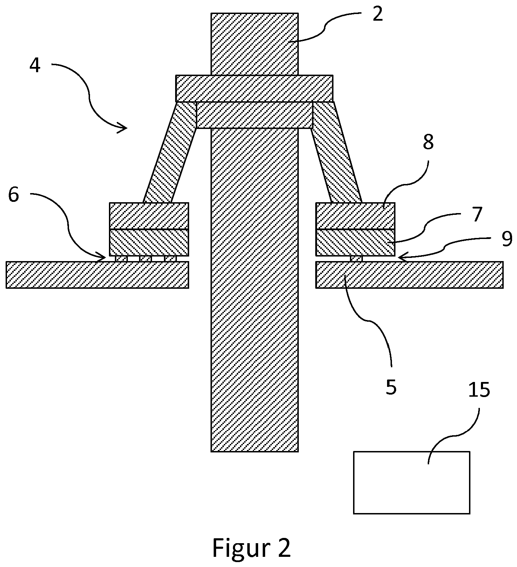

Figur 2 zeigt einen Ausschnitt des Axiallagers aus Figur 1 in stark schematischer Darstellung. Die Welle ist wiederum mit 2 bezeichnet. Die Stützkonstruktion umfasst eine Lagerplatte, welche mit 5 bezeichnet ist. Die Lagerplatte 5 ist konzentrisch zur Welle 2 angeordnet und trägt eine Vielzahl von Federelementen, welche mit 6 bezeichnet sind. Die Lagerplatte 5 ist oft als Ring ausgebildet, kann aber auch eine andere äußere Kontur aufweisen. Um der besseren Erkennbarkeit willen, sind die Federelemente 6 nur auf der linken Seite der Figur 2 eingezeichnet. Die Federelemente 6 stützen die Lagerschuhe, von denen einer mit 7 bezeichnet ist. Die Lastübertragungseinrichtung, welche fest mit der Welle 2 verbunden ist, ist wiederum mit 4 bezeichnet und umfasst einen Spurring, welcher mit 8 bezeichnet ist. Der Spurring 8 ist konzentrisch zu Welle 2 so angeordnet, dass er auf den Lagerschuhen 7 rotieren kann. Das Axiallager 1 umfasst ferner wenigstens eine Messvorrichtung zur Messung des mittleren Abstandes zwischen der Lagerplatte 5 und wenigstens einem der Lagerschuhe 7. Die Messvorrichtung ist mit 9 bezeichnet. Damit die Messvorrichtung 9 den mittleren Abstand zwischen der Lagerplatte 5 und einem der Lagerschuhe 7 messen kann, muss die Messvorrichtung 9 an oder in der Nähe des Abstützschwerpunktes des betreffenden Lagerschuhes 7 angeordnet sein.

Die Erfinder haben erkannt, dass die vom Axiallager 1 aufgenommene Axiallast sehr einfach und effektiv durch die Messung des mittleren Abstandes zwischen der Lagerplatte 5 und wenigstens einem der Lagerschuhe 7 bestimmt werden kann. Die Federelemente 6, die sich zwischen der Lagerplatte 5 und den Lagerschuhen 7 befinden, werden durch das Einwirken der Axiallast zusammengedrückt. Ohne Einwirken einer Axiallast würde der Abstand zwischen der Lagerplatte 5 und den Lagerschuhen 7 genau der axialen Erstreckung der Federelemente 6 entsprechen. Aus dem genannten unter Einwirkung der Axiallast gemessenen mittleren Abstand und der bekannten Federkonstante und der axialen Erstreckung der Federelemente ohne Last lässt sich die Axiallast einfach berechnen.

In Figur 2 ist ferner eine Einheit zur Erfassung der Messdaten, d.h. der von der Messvorrichtung 9 gemessenen Abstände, angedeutet und mit 15 bezeichnet. Die Einheit 15 kann entfernt vom Lager 1 angeordnet sein und ist nicht Teil des Lagers.

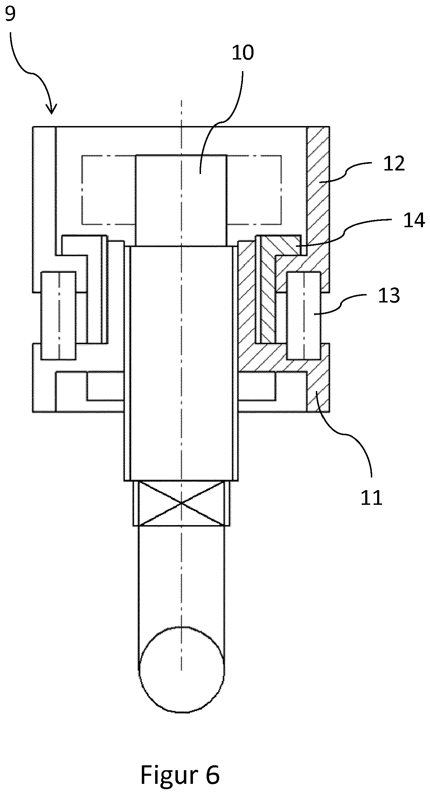

Die Erfinder haben sich dabei weiter die Aufgabe gestellt, die Messvorrichtung 9 zur Messung des mittleren Abstandes zwischen der Lagerplatte 5 und wenigstens einem der Lagerschuhe 7 so zu gestalten, dass die Messvorrichtung 9 einfach kalibriert und in die bekannten Lageranordnungen integriert werden kann, und eine Messung des Abstandes über lange Zeit zuverlässig erfolgen kann (vgl. hierzu die Ausführungen zu Figur 6).

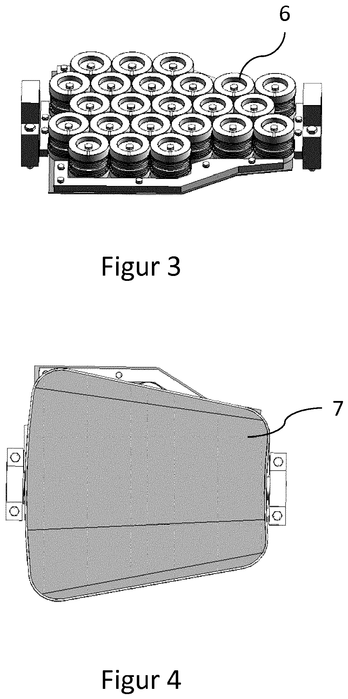

Figur 3 zeigt eine Gruppe von Federelementen in perspektivischer Ansicht, von denen eines wiederum mit 6 bezeichnet ist. Die Federelemente 6 sind in dieser Ausführungsform gemäß der US 4 168101 gestaltet. Man spricht dann auch von einer Federmatratzenunterstützung der Lagerschuhe.

Figur 4 zeigt einen Lagerschuh in Draufsicht, welcher wiederum mit 7 bezeichnet ist.

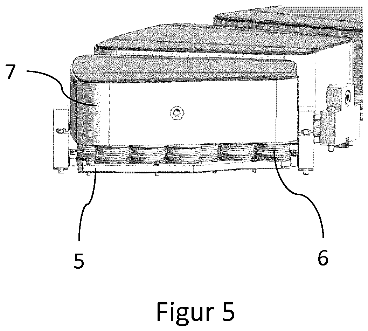

Figur 5 zeigt in perspektivischer Ansicht die Lagerplatte, welche wiederum mit 5 bezeichnet ist, eine Gruppe von Federelementen, von denen eines wiederum mit 6 bezeichnet ist, und einen Lagerschuh, welcher wiederum mit 7 bezeichnet ist.

Figur 6 zeigt einen Schnitt durch eine Messvorrichtung 9 zur Messung des Abstandes zwischen Lagerplatte 5 und einem Lagerschuh 7 im Schnitt. Die Messvorrichtung 9 umfasst einen Abstandssensor, welcher mit 10 bezeichnet ist, ein Gehäuse, welches mit 11 bezeichnet ist, einen Druckzylinder, welcher mit 12 bezeichnet ist, wenigstens ein elastisches Element, welches mit 13 bezeichnet ist, und eine Einrichtung zur Justierung, welche mit 14 bezeichnet ist. Der Abstandssensor 10 ist mit dem Gehäuse 11 verbunden.

Als Abstandssensor 10 kommen alle bekannten Sensortypen in Frage, wobei besonders vorteilhaft Abstandssensoren verwendet werden können, die auf einem berührungslosen Messprinzip beruhen, wie z.B. Sensoren, die auf Wirbelstromtechnik beruhen, oder Sensoren, die optisch oder kapazitiv arbeiten. Genauso gut können jedoch auch Sensoren verwendet werden, die mittels Berührung arbeiten, z.B. Taster oder Fühler.

Der hohle Druckzylinder 12 so ausgebildet und mit dem Gehäuse 11 verbunden, dass er in axialer Richtung (d.h. in Bezug auf die Achse des Lagers 1) relativ zum Gehäuse 11 bewegt werden kann. Im eingebauten Zustand befindet sich das Gehäuse 11 in Kontakt mit der Lagerplatte 5 und der Druckzylinder 12 in Kontakt mit dem Lagerschuh 7. Das elastische Element 13 ist so zwischen dem Gehäuse 11 und dem Druckzylinder 12 angeordnet, dass es einer Annäherung von Lagerplatte 5 und Lagerschuh 7 entgegenwirken kann. Bei dem elastischen Element 13 kann es sich beispielsweise um eine Schraubendruckfeder handeln. In diesem Fall kann sich im Inneren der Feder ein Führungsstift befinden, welcher entweder mit dem Gehäuse 11 oder mit dem Druckzylinder 12 verbunden ist.

Die Einrichtung zur Justierung 14 dient einerseits zur Vorspannung des oder der elastischen Elemente 13 und zur Einstellung der maximal möglichen axialen Erstreckung der durch Gehäuse 11 und Druckzylinder 12 gebildeten Baugruppe. In der in Figur 6 gezeigten Ausführungsform besteht die Einrichtung zur Justierung 14 aus einer Hülse mit Innengewinde. Die Hülse wird mittels des Innengewinde auf ein entsprechendes Gegenstück am Gehäuse 11 geschraubt. Ein Vorsprung an der Hülse greift in den Druckzylinder 12 ein, welcher die erwähnte Erstreckung in axialer Richtung begrenzt und gleichzeitig die elastischen Elemente 13 vorspannt, wenn die Hülse mit dem Innengewinde an das Gehäuse 11 geschraubt wird. Die Einrichtung zur Justierung 14 kann jedoch auch auf andere Weise ausgebildet sein. Beispielsweise kann derselbe Zweck auch mit Hilfe der oben erwähnten Führungsstifte erreicht werden, wenn diese beispielsweise auf der unteren Seite in das Gehäuse 11 eingeschraubt werden können und durch Öffnungen im Druckzylinder 12 hindurchragen und dort einen Vorsprung zur Begrenzung (z.B. einen dicken Kopf) aufweisen. Dem mit der Ausführung betrauten Fachmann wird es nicht schwerfallen, noch weitere äquivalente Ausführungsformen der Einrichtung zur Justierung 14 zur Ausführung zu bringen.

Der Abstandssensor 10 ist so mit dem Gehäuse 11 verbunden, dass der Sensorkopf (d.h. das zur Abstandsmessung geeignete Ende des Abstandssensors 10) im Innern des Druckzylinders 12 angeordnet und im eingebauten Zustand in Richtung zum Lagerschuh 7 ausgerichtet ist.

In der in Figur 6 gezeigten Ausführungsform ist der Druckzylinder 12 in Richtung zum Lagerschuh 7 (d.h. in der Figur nach oben hin) offen. Im eingebauten Zustand misst der Abstandssensor 10 dann den Abstand zwischen dem Sensorkopf und dem Lagerschuh 7. Der Druckzylinder 7 kann jedoch auch über einen mit demselben verbindbaren Deckel verfügen, der den Druckzylinder 12 nach oben zu verschließt. In diesem Fall misst der Abstandssensor 10 dann den Abstand zwischen dem Sensorkopf und dem Deckel, welcher direkt an den Lagerschuh 7 angrenzt. Da die Lage des Abstandssensors 10 im Gehäuse 11, welches sich wiederrum in Kontakt mit der Lagerplatte 5 befindet, und die Dicke eines ggf. vorhanden Deckels bekannt sind, kann aus dem gemessenen Abstand der Abstand zwischen Lagerplatte 5 und Lagerschuh 7 bestimmt werden.

Die Kalibrierung des Abstandssensors 10 kann im nicht eingebauten Zustand der Messvorrichtung 9 erfolgen. Dazu wird die maximal mögliche axiale Erstreckung der durch Gehäuse 11 und Druckzylinder 12 gebildeten Baugruppe mit Hilfe der Einrichtung zur Justierung 14 so eingestellt, dass sie der axialen Erstreckung der unbelasteten Federelemente 6 entspricht. Dies kann besonders exakt erfolgen, wenn das Gehäuse 11 über einen entsprechenden Anschlag verfügt. In der Ausführungsform gemäß Figur 6 wird dazu die Hülse 14 so weit eingeschraubt, bis sie auf dem Gehäuse 11 aufsitzt. Eine größere axiale Erstreckung der Baugruppe aus Gehäuse 11 und Druckzylinder 12 kann durch die Einlage eines Ringes mit geeigneter Dicke zwischen Hülse 14 und Gehäuse 11 erreicht werden. So kann ein konstruktionsgleiches Gehäuse 11 für Federelemente 6 mit unterschiedlicher Erstreckung in axialer Richtung verwendet werden. Dann wird z.B. ein ebenes Blech auf den Druckzylinder 12 aufgelegt, dessen Gewicht nicht ausreicht um den Druckzylinder 12 gegen den Widerstand des vorgespannten elastischen Elements 13 niederzudrücken. Es wird nun mit dem Abstandssensor 10 der Abstand zum Blech gemessen. Falls der Druckzylinder 12 über einen Deckel verfügt, wird natürlich kein Blech zur Kalibrierung benötigt. Der aufgenommen Messwert ist der Referenzwert und repräsentiert die axialen Erstreckung der unbelasteten Federelemente 6. Wenn sich die Messvorrichtung 9 im eingebauten Zustand im Lager 1 befindet wird dieselbe zusammen mit den Federelementen 6 in axialer Richtung zusammengepresst, wobei die axiale Erstreckung der durch Gehäuse 11 und Druckzylinder 12 gebildeten Baugruppe verringert und der Abstandssensor 10 einen Abstand misst, der geringer ist als der Referenzwert. Aus der Differenz kann wie oben beschrieben die vorliegende Axiallast berechnet werden.

Neben der einfachen Kalibrierbarkeit besteht ein weiterer Vorteil der erfindungsgemäßen Anordnung darin, dass der Abstandssensor 10 durch die Baugruppe aus Gehäuse 11 und Druckzylinder 12 geschützt wird, was den Einbau wesentlich erleichtert und die Funktionsweise auf Dauer gewährleistet. Besonders gut ist der Schutz, wenn der Druckzylinder 12 über einen Deckel verfügt. Allerdings wird der verfügbare Messbereich des Abstandssensors 10 um die Dicke des Deckels verringert, was nicht immer erwünscht ist.

Besonders vorteilhaft kann die erfindungsgemäße Anordnung verwendet werden, wenn die Messvorrichtung 9 in eine Gruppe von Federelementen 6 gemäß Figur 3 integriert wird. Dann werden die Abmessungen von Gehäuse 11 und Druckzylinder 12 lateral zur Achse so gewählt, dass sie den Abmessungen eines Federelements 6 lateral zur Achse entsprechen. So kann die Messvorrichtung 9 einfach anstelle eines Federelements 6 in die Federmatratze eingebaut werden. Dadurch ergibt sich die Positionierung und Halterung der Messvorrichtung 9 in lateraler Richtung von selbst.

Die Verbindung des Abstandssensors 10 mit der Einheit 15 zur Erfassung der Messdaten kann über Drähte oder auch drahtlos erfolgen. Eine drahtlose Anbindung kann beispielsweise über Bluetooth erfolgen. Im Falle der Anbindung durch Drähte, werden diese durch Bohrungen in der Lagerplatte 5 geführt. In der Ausführungsform gemäß Figur 6 ragt der Abstandssensor 10 nach unten über das Gehäuse 11 hinaus, wobei eine Steckverbindung und ein die Drähte umfassendes Kabel ebenfalls angedeutet sind. Es ist klar dass diese Teile im eingebauten Zustand ebenfalls in einer entsprechenden Bohrung in der Lagerplatte 5 angeordnet sind.

## Patentansprüche

1. Axiallager (1) zum Aufnehmen hoher Axiallasten einer Welle (2), mit einer Stützkonstruktion (3) und einer Lastübertragungseinrichtung (4) zum Übertragen der Last von der Welle (2) auf die Stützkonstruktion (3), wobei die Stützkonstruktion (3) eine Lagerplatte (5), eine Mehrzahl von Federelementen (6) und eine Mehrzahl von Lagerschuhen (7) umfasst, wobei sich die Federelemente (6) auf der Lagerplatte (5) abstützen und in Gruppen angeordnet sind, wobei jede Gruppe von Federelementen (6) von einem Lagerschuh (7) überdeckt wird, und wobei die Lastübertragungseinrichtung (4) fest mit der Welle verbunden ist und einen Spurring (8) umfasst, welcher so angeordnet ist, dass er auf den Lagerschuhen rotieren kann, und wobei die Lagerplatte (5) und der Spurring (8) jeweils konzentrisch zur Welle (2) angeordnet sind, **dadurch gekennzeichnet, dass** das Axiallager (1) eine Messvorrichtung (9) zur Messung des mittleren Abstandes zwischen Lagerplatte (5) und einem Lagerschuh (7) umfasst, wobei die Messvorrichtung (9) in der Nähe des Abstützschwerpunktes eines der Lagerschuhe (7) angeordnet ist, und wobei die Messvorrichtung (9) einen Abstandssensor (10), ein Gehäuse (11), einen hohlen Druckzylinder (12), ein elastisches Element (13), und eine Einrichtung zur Justierung (14) umfasst, wobei der Druckzylinder (12) so ausgebildet und mit dem Gehäuse (11) verbunden ist, dass er in axialer Richtung relativ zum Gehäuse (11) bewegt werden kann, und wobei das Gehäuse (11) in Kontakt mit der Lagerplatte (5) und der Druckzylinder (12) in Kontakt mit dem Lagerschuh (7) ist, und wobei das elastische Element (13) so zwischen dem Gehäuse (11) und dem Druckzylinder (12) angeordnet ist, dass es einer Annäherung von Lagerplatte (5) und Lagerschuh (7) entgegenwirken kann, und wobei der Abstandssensor (10) so mit dem Gehäuse (11) verbunden ist, dass der Kopf des Abstandssensors (10) im Innern des Druckzylinders (12) angeordnet und in Richtung zum Lagerschuh (7) ausgerichtet ist, und wobei die Einrichtung zur Justierung (14) so ausgebildet ist, dass sie das elastischen Elemente (13) vorspannen und die axiale Erstreckung der durch Gehäuse (11) und Druckzylinder (12) gebildeten Baugruppe begrenzen kann, wobei die so begrenzte maximale axiale Erstreckung dieser Baugruppe der axialen Erstreckung der unbelasteten Federelemente (6) entspricht.

2. Axiallager (1) nach Anspruch 1, wobei der Abstandssensor (10) so ausgebildet ist, dass er einen Abstand berührungslos messen kann.

3. Axiallager (1) nach einen der Ansprüche 1 oder 2, wobei die Einrichtung zur Justierung (14) aus einer Hülse mit Innengewinde besteht, und wobei das Gehäuse (11) ein Außengewinde aufweist, welches so ausgebildet ist, dass die Hülse auf dasselbe geschraubt werden kann, und wobei die Hülse einen Vorsprung aufweist, welcher so ausgebildet ist, dass er in den Druckzylinder (12) eingreifen kann, um durch das Aufschrauben der Hülse auf das Außengewinde des Gehäuses (11) das elastischen Elemente (13) vorzuspannen und die axiale Erstreckung der durch Gehäuse (11) und Druckzylinder (12) gebildeten Baugruppe zu begrenzen.

4. Axiallager (1) nach einem der Ansprüche 1 bis 3, wobei der Abstandssensor (10) so ausgebildet ist, dass er an eine externe Einheit (15) zur Erfassung der Messdaten drahtlos verbindbar ist.

5. Axiallager (1) nach einem der Ansprüche 1 bis 3, wobei der Abstandssensor (10) so ausgebildet ist, dass er an eine externe Einheit (15) zur Erfassung der Messdaten durch Drähte verbindbar ist, wobei die Lagerplatte (5) eine Öffnung zur Durchführung der Drähte aufweist.

6. Axiallager (1) nach einem der Ansprüche 1 bis 5, wobei der Druckzylinder (12) einen Deckel umfasst, welcher so ausgebildet und mit dem Druckzylinder (12) verbunden ist, dass er denselben in axialer Richtung auf den Lagerschuh (7) hin verschließt.

7. Axiallager (1) nach einem der Ansprüche 1 bis 6, wobei die Gruppen von Federelementen (6) jeweils Federelemente (6) mit untereinander identischen Abmessungen aufweisen, und die Abmessungen von Gehäuse (11) und Druckzylinder (12) lateral zur Achse den Abmessungen eines Federelements (6) lateral zur Achse entsprechen.

## Claims

1. Axial bearing (1) for taking up high axial loads of a shaft (2), having a supporting structure (3) and a load transmission device (4) for transmitting the load from the shaft (2) to the supporting structure (3), wherein the supporting structure (3) comprises a bearing plate (5), a plurality of spring elements (6) and a plurality of bearing shoes (7), wherein the spring elements (6) are supported on the bearing plate (5) and are arranged in groups, wherein each group of spring elements (6) is covered by a bearing shoe (7), and wherein the load transmission device (4) is fixedly connected to the shaft and comprises a thrust ring (8) which is arranged in such a way that it can rotate on the bearing shoes, and wherein the bearing plate (5) and the thrust ring (8) are each arranged concentrically to the shaft (2), **characterized in that** the axial bearing (1) comprises a measuring device (9) for measuring the average distance between the bearing plate (5) and a bearing shoe (7), wherein the measuring device (9) is arranged in the vicinity of the supporting centre of gravity of one of the bearing shoes (7), and wherein the measuring device (9) comprises a distance sensor (10), a housing (11), a hollow pressure cylinder (12), an elastic element (13) and an adjustment device (14), wherein the pressure cylinder (12) is designed and connected to the housing (11) in such a way that it can moved in the axial direction relative to the housing (11), and wherein the housing (11) is in contact with the bearing plate (5), and the pressure cylinder (12) is in contact with the bearing shoe (7), and wherein the elastic element (13) is arranged between the housing (11) and the pressure cylinder (12) in such a way that it can counteract the bearing plate (5) and bearing shoe (7) being drawn closer together, and wherein the distance sensor (10) is connected to the housing (11) in such a way that the head of the distance sensor (10) is arranged inside the pressure cylinder (12) and oriented in the direction of the bearing shoe (7), and wherein the adjustment device (14) is designed in such a way that it can preload the elastic element (13) and delimit the axial extent of the assembly formed by the housing (11) and pressure cylinder (12), wherein the thus delimited maximum axial extent of this assembly corresponds to the axial extent of the unloaded spring elements (6).

2. Axial bearing (1) according to Claim 1, wherein the distance sensor (10) is designed in such a way that it can contactlessly measure a distance.

3. Axial bearing (1) according to either of Claims 1 and 2, wherein the adjustment device (14) consists of a sleeve with an internal thread, and wherein the housing (11) has an external thread which is formed in such a way that the sleeve can be screwed onto the latter, and wherein the sleeve has a projection which is formed in such a way that it can engage in the pressure cylinder (12) in order to preload the elastic element (13) as a result of the sleeve being screwed onto the external thread of the housing (11) and in order to delimit the axial extent of the assembly formed by the housing (11) and pressure cylinder (12).

4. Axial bearing (1) according to one of Claims 1 to 3, wherein the distance sensor (10) is designed in such a way that it can be wirelessly connected to an external unit (15) for detecting the measurement data.

5. Axial bearing (1) according to one of Claims 1 to 3, wherein the distance sensor (10) is designed in such a way that it can be connected by means of wires to an external unit (15) for detecting the measurement data, wherein the bearing plate (5) has an opening for routing through the wires.

6. Axial bearing (1) according to one of Claims 1 to 5, wherein the pressure cylinder (12) comprises a cover which is designed and connected to the pressure cylinder (12) in such a way that it closes the latter in the axial direction towards the bearing shoe (7).

7. Axial bearing (1) according to one of Claims 1 to 7, wherein the groups of spring elements (6) each have spring elements (6) with mutually identical dimensions, and the dimensions of the housing (11) and pressure cylinder (12) laterally to the axis correspond to the dimensions of a spring element (6) laterally to the axis.

## Revendications

1. Palier axial (1) pour l'absorption de charges axiales élevées d'un arbre (2), muni d'une structure d'appui (3) et d'un appareil de transfert de charge (4) pour le transfert de la charge de l'arbre (2) à la structure d'appui (3), la structure d'appui (3) comportant une plaque de palier (5), une pluralité d'éléments ressorts (6) et une pluralité de sabots de palier (7), les éléments ressorts (6) prenant appui sur la plaque de palier (5) et étant agencés en groupes, chaque groupe d'éléments ressorts (6) étant recouvert par un sabot de palier (7), et l'appareil de transfert de charge (4) étant relié de manière fixe à l'arbre et comportant une bague de serrage (8), qui est agencée de manière à pouvoir tourner sur les sabots de palier, et la plaque de palier (5) et la bague de serrage (8) étant agencées chacune de manière concentrique avec l'arbre (2), **caractérisé en ce que** le palier axial (1) comporte un dispositif de mesure (9) pour la mesure de la distance moyenne entre la plaque de palier (5) et un sabot de palier (7), le dispositif de mesure (9) étant agencé à proximité du centre de gravité d'appui d'un des sabots de palier (7), et le dispositif de mesure (9) comprenant un capteur de distance (10), un boîtier (11), un cylindre de pression creux (12), un élément élastique (13) et un appareil d'ajustement (14), le cylindre de pression (12) étant configuré et relié au boîtier (11) de manière à pouvoir être déplacé dans la direction axiale par rapport au boîtier (11), et le boîtier (11) étant en contact avec la plaque de palier (5) et le cylindre de pression (12) étant en contact avec le sabot de palier (7), et l'élément élastique (13) étant agencé entre le boîtier (11) et le cylindre de pression (12) de manière à pouvoir contrer un rapprochement de la plaque de palier (5) et du sabot de palier (7), et le capteur de distance (10) étant relié au boîtier (11) de manière à ce que la tête du capteur de distance (10) soit agencée à l'intérieur du cylindre de pression (12) et dirigée dans la direction du sabot de palier (7), et l'appareil d'ajustement (14) étant configuré de telle sorte qu'il prétend l'élément élastique (13) et peut limiter l'extension axiale du sous-groupe formé par le boîtier (11) et le cylindre de pression (12), l'extension axiale maximale ainsi limitée de ce sous-groupe correspondant à l'extension axiale des éléments ressorts (6) non chargés.

2. Palier axial (1) selon la revendication 1, dans lequel le capteur de distance (10) est configuré de manière à pouvoir mesurer une distance sans contact.

3. Palier axial (1) selon l'une quelconque des revendications 1 ou 2, dans lequel l'appareil d'ajustement (14) est constitué par une gaine munie d'un filetage intérieur, et dans lequel le boîtier (11) comprend un filetage extérieur, qui est configuré de manière à ce que la gaine puisse être vissée sur celui-ci, et dans lequel la gaine comprend une protubérance, qui est configurée de manière à pouvoir pénétrer dans le cylindre de pression (12), afin de prétendre l'élément élastique (13) par vissage de la gaine sur le filetage extérieur du boîtier (11), et de limiter l'extension axiale du sous-groupe formé par le boîtier (11) et le cylindre de pression (12).

4. Palier axial (1) selon l'une quelconque des revendications 1 à 3, dans lequel le capteur de distance (10) est configuré de manière à pouvoir être relié sans fil à une unité externe (15) pour l'acquisition des données de mesure.

5. Palier axial (1) selon l'une quelconque des revendications 1 à 3, dans lequel le capteur de distance (10) est configuré de manière à pouvoir être relié par des fils à une unité externe (15) pour l'acquisition des données de mesure, la plaque de palier (5) comprenant une ouverture pour le passage des fils.

6. Palier axial (1) selon l'une quelconque des revendications 1 à 5, dans lequel le cylindre de pression (12) comprend un couvercle, qui est configuré et relié avec le cylindre de pression (12) de manière à fermer celui-ci dans la direction axiale vers le sabot de palier (7).

7. Palier axial (1) selon l'une quelconque des revendications 1 à 6, dans lequel les groupes d'éléments ressorts (6) comprennent chacun des éléments ressorts (6) ayant des dimensions identiques entre eux, et les dimensions du boîtier (11) et du cylindre de pression (12) latéralement à l'axe correspondent aux dimensions d'un élément ressort (6) latéralement à l'axe.
